# EUROPEAN PATENT APPLICATION

(11) **EP 4 708 817 A1**
(43) Date of publication of application: **11.03.2026**
(21) Application number: 23938253.4
(22) Date of filing: 04.12.2023
(51) Int. Cl.: H04L 67/10, H04L 12/00

(54) **CLOUD SYSTEM BASED ON PUBLIC CLOUD SERVICE, PACKET PROCESSING METHOD, AND RELATED DEVICE**

(30) Priority: 22.05.2023 CN 202310579623
(71) Applicant: Huawei Cloud Computing Technologies Co., Ltd., Guizhou 550025 (CN)
(72) Inventor: ZHAO, Haifei, Shenzhen, Guangdong 518129 (CN)
(74) Representative: Maiwald GmbH
(86) International application number: PCT/CN2023/136257
(87) International publication number: WO 2024/239586

(57) **Abstract**

This application discloses a cloud system based on a public cloud service, a packet processing method, and a related apparatus. The cloud system is set on an infrastructure that provides a public cloud service. The infrastructure includes a plurality of data centers. Each of the data centers is provided with at least one server. The public cloud service runs on one or more servers of the infrastructure. The cloud system includes a virtual private cloud VPC and a load balancer. The VPC includes a first subnet, a second subnet, and a third subnet. The load balancer includes a first elastic network interface ENI and a second ENI. In the cloud system provided in this solution, when sending a request packet to a second instance in the second subnet, a first instance in the first subnet forwards the packet to a packet processing service node in the third subnet via the first ENI and the second ENI. In this way, the packet is forwarded by the packet processing service node in the third subnet without additional packet header encapsulation, thereby simplifying a packet processing operation, and improving performance of the cloud system.

## Description

### TECHNICAL FIELD

This application relates to the field of cloud technologies, and in particular, to a cloud system based on a public cloud service, a packet processing method, and a related apparatus.

### BACKGROUND

With development of communication technologies, cloud service technologies emerge. Virtual private cloud (virtual private cloud, VPC) is widely used in various industries. In VPC scenarios, users may set up various instances on VPC and implement service communication and the like by using the set-up instances. However, how to ensure communication reliability in the VPC scenarios is a research hotspot in the industry.

### SUMMARY

This application provides a cloud system based on a public cloud service, a packet processing method, and a related apparatus, to improve communication reliability in a VPC scenario. The technical solutions are as follows.

According to a first aspect, a cloud system based on a public cloud service is provided, where the cloud system is set on an infrastructure that provides a public cloud service, the infrastructure includes a plurality of data centers, each of the data centers is provided with at least one server, the public cloud service runs on one or more servers of the infrastructure, and the cloud system includes:
a VPC, including a first subnet, a second subnet, a third subnet, and a router connected to the first subnet, the second subnet, and the third subnet, where the first subnet is provided with a first virtual instance, the second subnet is provided with a second virtual instance, the third subnet is provided with a packet processing cluster, and the packet processing cluster includes a plurality of nodes on which a packet processing service is set; and
a load balancer, including a first elastic network interface (elastic network interface, ENI) and a second ENI, where the first ENI is connected to both the first subnet and the second subnet, and the second ENI is connected to the third subnet.

The cloud system is configured to implement a packet processing procedure based on a public cloud service, and the packet processing procedure includes an outbound path and an inbound path of a packet. The following describes the outbound path of the packet by using a process in which the cloud system processes a request packet.

The first virtual instance is configured to send a request packet to the first ENI, where a destination internet protocol (Internet protocol, IP) address of the request packet is a private network address of the second virtual instance in the second subnet, and a source IP address thereof is a private network address of the first virtual instance in the first subnet.

The load balancer is configured to: receive the request packet from the first ENI, determine a destination node from the plurality of nodes based on the source IP address and the destination IP address of the request packet, and send the request packet to the destination node via the second ENI, where a packet processing rule defined by a tenant of the VPC is set on the destination node.

The destination node is configured to: when determining that the request packet conforms to the packet processing rule, send the request packet to the second virtual instance by using the router based on the destination IP address of the request packet.

It may be learned from the foregoing descriptions that, in the cloud system provided in this solution, when sending the request packet to the second instance in the second subnet, the first instance in the first subnet forwards the packet to a packet processing service node in the third subnet via the first elastic network interface ENI and the second ENI. In this way, the packet is forwarded by the packet processing service node in the third subnet without additional packet header encapsulation, thereby simplifying a packet processing operation, and improving performance of the cloud system.

The source IP address and the destination IP address of the request packet are set in a quintuple of the request packet, and the quintuple of the request packet further includes a source port, a destination port, and a transport layer protocol of the request packet. Based on this, the load balancer is specifically configured to: perform an operation on the quintuple of the request packet based on a bidirectional consistent hashing algorithm, and determine the destination node from the plurality of nodes based on a first operation result generated from the operation. Because the consistent hashing algorithm only needs to reallocate nodes corresponding to some data flows during node addition or deletion, and does not adjust nodes corresponding to all data flows, this solution has relatively good fault tolerance and scalability.

In this solution, the load balancer is further configured to: before sending the request packet to the destination node via the second ENI, modify a destination media access control (media access control, MAC) address of the request packet to a MAC address of the destination node, and modify a source MAC address thereof to a MAC address of the second ENI.

In this way, the tenant does not need to perform additional overlay (overlay) protocol configuration on the load balancer and the packet processing cluster, thereby simplifying an operation of the tenant, improving operability of the cloud system, and improving performance of the cloud system. In other words, this solution ensures load balancing and reliability of a user service without requiring the tenant to perform any additional development on the load balancer and packet processing cluster that are set up by the tenant.

The following describes the inbound path of the packet by using a process in which the cloud system processes a response packet corresponding to the request packet.

The second virtual instance is configured to: receive the request packet, generate a response packet based on the request packet, and send the response packet to the first ENI, where a destination IP address of the response packet is the private network address of the first virtual instance in the first subnet, and a source IP address thereof is the private network address of the second virtual instance in the second subnet.

The load balancer is further configured to: receive the response packet from the first ENI, determine the destination node from the plurality of nodes based on the source IP address and the destination IP address of the response packet, and send the response packet to the destination node via the second ENI.

The destination node is further configured to: when determining that the response packet conforms to the packet processing rule, send the response packet to the first virtual instance by using the router based on the destination IP address of the response packet.

Similarly, in a process in which the virtual instance in the second subnet transmits a packet to the virtual instance in the first subnet, the packet is also forwarded by a node in the third subnet without additional packet header encapsulation, thereby simplifying a packet processing operation, and improving performance of the cloud system.

The source IP address and the destination IP address of the response packet are set in a quintuple of the response packet, and the quintuple of the response packet further includes a source port, a destination port, and a transport layer protocol of the response packet. The load balancer is specifically configured to: perform an operation on the quintuple of the response packet based on the bidirectional consistent hashing algorithm, and determine the destination node from the plurality of nodes based on a second operation result generated from the operation, where a value of the first operation result is the same as a value of the second operation result. In this way, the response packet and the request packet pass through a same destination node. In other words, the bidirectional consistent hashing algorithm is introduced, so that a packet passes through a same destination node in an outbound path and an inbound path, and information such as tunnel information and session information that are based on another overlay protocol is not additionally recorded. This helps improve performance, simplify configuration of the load balancer, and improve reliability.

In this application, the destination node is further configured to: discard the request packet when determining that the request packet does not conform to the packet processing rule, and/or discard the response packet when determining that the response packet does not conform to the packet processing rule. In this way, the packet processing cluster in the third subnet filters the packet based on the packet processing rule, to improve communication security.

The packet processing rule includes a firewall packet filtering rule or a security group rule.

The firewall filtering rule is used as an example. The tenant may create a plurality of firewall nodes in the third subnet as the packet processing cluster. In this way, the packet can be securely filtered by using the firewall node in the third subnet, thereby improving communication security.

In this application, the cloud system further includes a cloud management platform, and the cloud management platform is configured to: receive one or more public cloud service configuration instructions that are input by the tenant, and create the VPC, the load balancer, and the packet processing cluster on the infrastructure according to the one or more public cloud service configuration instructions. The tenant does not need to perform complex overlay protocol configuration on the load balancer and packet processing cluster, thereby ensuring communication reliability.

According to a second aspect, a packet processing method based on a public cloud service is provided. The method is applied to an infrastructure that provides a public cloud service. The infrastructure includes a VPC and a load balancer. The VPC includes a first subnet, a second subnet, a third subnet, and a router connected to the first subnet, the second subnet, and the third subnet. The first subnet is provided with a first virtual instance, the second subnet is provided with a second virtual instance, and the third subnet is provided with a packet processing cluster. The packet processing cluster includes a plurality of nodes on which a packet processing service is set, the load balancer includes a first ENI and a second ENI, the first ENI is connected to both the first subnet and the second subnet, the second ENI is connected to the third subnet, and the method includes:

The first virtual instance sends a request packet to the first ENI, where a destination IP address of the request packet is a private network address of the second virtual instance in the second subnet, and a source IP address thereof is a private network address of the first virtual instance in the first subnet; the load balancer receives the request packet from the first ENI, determines a destination node from the plurality of nodes based on the source IP address and the destination IP address of the request packet, and sends the request packet to the destination node via the second ENI, where a packet processing rule defined by a tenant of the VPC is set on the destination node; and when determining that the request packet conforms to the packet processing rule, the destination node sends the request packet to the second virtual instance by using the router based on the destination IP address of the request packet.

Any one of the second aspect or the implementations of the second aspect is a step implementation of the method corresponding to any one of the first aspect or the implementations of the first aspect. Descriptions in any one of the second aspect or the implementations of the second aspect are applicable to any one of the first aspect or the implementations of the first aspect, and details are not described herein.

According to a third aspect, a configuration method based on a public cloud service is provided, where the method is applied to a cloud management platform, the cloud management platform is configured to manage an infrastructure that provides a public cloud service, the infrastructure includes a plurality of data centers, each of the data centers is provided with at least one server, the public cloud service runs on one or more servers of the infrastructure, and the method includes:

The cloud management platform receives one or more public cloud service configuration instructions that are input by a tenant; and
the cloud management platform creates a VPC, a load balancing node, and a packet processing cluster on the infrastructure according to the one or more public cloud service configuration instructions, where the VPC includes a first subnet, a second subnet, a third subnet, and a router connected to the first subnet, the second subnet, and the third subnet, the first subnet is provided with a first virtual instance, the second subnet is provided with a second virtual instance, the third subnet is provided with a packet processing cluster, the packet processing cluster includes a plurality of nodes on which a packet processing service is set, the load balancer includes a first ENI and a second ENI, the first ENI is separately connected to a first subnet and a second subnet, and the second ENI is connected to a third subnet.

The cloud system provided in this solution may be used by the tenant to set up, in the third subnet of the VPC, the packet processing cluster including a plurality of nodes, so that packet processing reliability can be improved by using the plurality of nodes. Specifically, after passing through the load balancer, tenant traffic may be distributed to a plurality of next hops, that is, distributed to the plurality of nodes in the packet processing cluster, thereby improving communication reliability.

According to a fourth aspect, a cloud management platform is provided, where the cloud management platform is configured to manage an infrastructure that provides a public cloud service, the infrastructure includes a plurality of data centers, each of the data centers is provided with at least one server, the public cloud service runs on one or more servers of the infrastructure, and the cloud management platform includes:
a configuration instruction receiving module, configured to receive one or more public cloud service configuration instructions that are input by a tenant; and
a cloud system creation module, configured to create a VPC, a load balancing node, and a packet processing cluster on the infrastructure according to the one or more public cloud service configuration instructions, where the VPC includes a first subnet, a second subnet, a third subnet, and a router connected to the first subnet, the second subnet, and the third subnet, the first subnet is provided with a first virtual instance, the second subnet is provided with a second virtual instance, the third subnet is provided with a packet processing cluster, the packet processing cluster includes a plurality of nodes on which a packet processing service is set, the load balancer includes a first ENI and a second ENI, the first ENI is connected to both the first subnet and the second subnet, and the second ENI is connected to the third subnet.

According to a fifth aspect, this application provides a computing device cluster, including at least one computing device, where each computing device includes a processor and a memory. The processor of the at least one computing device is configured to execute instructions stored in the memory of the at least one computing device, to cause the computing device cluster to perform the method disclosed in any one of the second aspect or the possible implementations of the second aspect.

According to a sixth aspect, this application provides a computer program product including instructions, where when the instructions are run by a computer device cluster, the computer device cluster is caused to implement the method disclosed in any one of the second aspect or the possible implementations of the second aspect.

According to a seventh aspect, this application provides a computer-readable storage medium, including computer program instructions. When the computer program instructions are executed by a computing device cluster, the computing device cluster is caused to perform the method disclosed in any one of the second aspect or the possible implementations of the second aspect.

### BRIEF DESCRIPTION OF DRAWINGS

FIG. 1 is an architectural diagram of a cloud data center according to an embodiment of this application;
FIG. 2 is an architectural diagram of a cloud system based on a public cloud service according to an embodiment of this application;
FIG. 3A to FIG. 3C are a working flowchart of a cloud system according to an embodiment of this application;
FIG. 4 is an architectural diagram of a VPC system according to an embodiment of this application;
FIG. 5 is an architectural diagram of another VPC system according to an embodiment of this application;
FIG. 6 is a flowchart of a packet processing method based on a public cloud service according to an embodiment of this application;
FIG. 7 is a flowchart of another packet processing method based on a public cloud service according to an embodiment of this application;
FIG. 8 is a flowchart of still another packet processing method based on a public cloud service according to an embodiment of this application;
FIG. 9 is a diagram of processing logic of a load balancer according to an embodiment of this application;
FIG. 10 is a diagram of a structure of a computing device according to an embodiment of this application;
FIG. 11 is a diagram of a structure of a computing device cluster according to an embodiment of this application;
FIG. 12 is a diagram of a structure of another computing device cluster according to an embodiment of this application;
FIG. 13 is a flowchart of a configuration method based on a public cloud service according to an embodiment of this application; and
FIG. 14 is a diagram of a structure of a cloud management platform according to an embodiment of this application.

### DESCRIPTION OF EMBODIMENTS

To make objectives, technical solutions, and advantages of embodiments of this application clearer, the following further describes implementations of this application in detail with reference to the accompanying drawings.

First, terms used in embodiments of this application are explained and described.

Container (docker): The container uses namespace (namespace) and control group (control group, Cgroup) technologies that are supported by an operating system kernel (such as the Linux kernel) to isolate an application process and a dependency package (runtime environment bins/libs, specifically including all files required to run an application program) thereof in an independent running environment.

Virtual machine (virtual machine, VM): The virtual machine is a complete computer system that is simulated by using software, has functions of a complete hardware system, and runs in an entirely isolated environment. All tasks that can be completed on a server can be implemented on a virtual machine. When the virtual machine is created on the server, a part of a hard disk and an internal memory capacity of a physical machine need to be used as a hard disk and an internal memory capacity of the virtual machine. Each virtual machine has an independent hard disk and operating system. A user of the virtual machine can operate the virtual machine as the user uses the server.

Virtual private cloud: The virtual private cloud (Virtual Private Cloud, VPC) is an isolated and private virtual network environment that a tenant applies for on a cloud.

Elastic load balancing: Elastic load balancing (Elastic Load Balancing, ELB) is a service that automatically distributes access traffic to a plurality of cloud servers, so as to expand an external service capability of an application system and achieve a higher level of application fault tolerance.

Consistent hashing algorithm (consistent Hashing algorithm): A conventional hashing algorithm is optimized to ensure, to a maximum degree, that an impact on an existing hash result is minimized in scenarios such as backend node failure or capacity expansion while maintaining good balancing.

The following briefly describes the technical background of embodiments of this application.

In conventional physical network technologies, when a plurality of paths with same overheads can be selected for a packet to a same IP address or network segment, equal-cost multi-path (equal-cost multi-path, ECMP) is formed. A network device selects, by hashing a quintuple of the packet, one of the paths to send the packet. Based on the ECMP technology, a user can direct service load to a plurality of backend servers, thereby implementing load balancing without an intermediary.

In a VPC scenario, all intra-VPC packets are forwarded based on deterministic entries, that is, a next hop of an IP address or network segment is a device corresponding to a specific IP address or MAC address. As a result, a capability to correspond one IP address or network segment to a plurality of next hops is lacked, and communication reliability is low.

A cloud system provided in this solution may be used by a tenant to set up a load balancer and a packet processing cluster including a plurality of nodes, so that tenant traffic is directed to a plurality of next hops after passing through the load balancer, that is, directed to the plurality of nodes, thereby improving communication reliability. Further, in this solution, the tenant does not need to perform additional overlay protocol configuration on the load balancer and the packet processing cluster, thereby simplifying an operation of the tenant, improving operability of the cloud system, and improving performance of the cloud system.

The following describes a cloud system based on a public cloud service, a packet processing method, a cloud management platform, and a configuration method based on a public cloud service that are provided in embodiments of this application.

Embodiments of this application provide a cloud system based on a public cloud service and a packet processing method, to improve service communication reliability of a tenant. Details are separately described in the following.

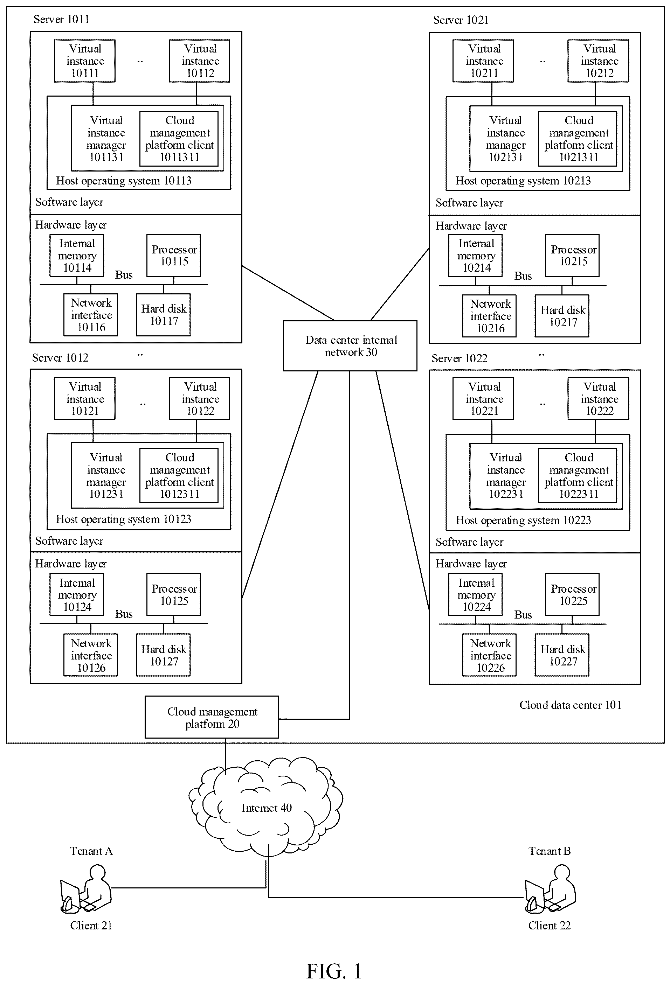

FIG. 1 is an architectural diagram of a cloud data center according to an embodiment of this application. Refer to FIG. 1. A cloud data center 101 includes a cloud management platform 20, a data center internal network 30 (which may be implemented by using a switch), a plurality of clients, and a plurality of servers. In FIG. 1, two clients and four servers are used as an example for description, for example, a client 21 and a client 22, and a server 1011, a server 1021, a server 1012, and a server 1022. The server 1011, the server 1021, the server 1012, and the server 1022 respectively complete information exchange with the cloud management platform 20 through the data center internal network by using a network interface 10116, a network interface 10216, a network interface 10126, and a network interface 10226, and the cloud management platform 20 completes information exchange with the plurality of clients by using an Internet 40.

The server 1011 is used as an example for description. The server 1011 includes a software layer and a hardware layer. A host operating system 10113 at the software layer includes a cloud instance manager 101131, and a cloud management platform client 1011311 runs on the cloud instance manager. The software layer further runs virtual instances such as a virtual instance 10111 and a virtual instance 10112. The hardware layer includes an internal memory 10114, a processor 10115, a hard disk 10117, the network interface 10116, and the like that are connected to each other through a bus.

The server 1021, the server 1012, and the server 1022 have a structure similar to that of the server 1011, and details are not described herein.

Each virtual instance may be, for example, a virtual machine (VM) or a container. Correspondingly, a virtual instance manager is a virtual machine manager, a container manager, or the like.

Specifically, the cloud management platform 20 provides an access interface, for example, a configuration interface for configuration by a tenant or an application programming interface (application programming interface, API) for configuration by a tenant. The tenant of the cloud data center 101 may operate the client 21 or the client 22 to remotely access the access interface, register a cloud account and a password on the cloud management platform 20, and log in to the cloud management platform 20. After the cloud account and the password are successfully authenticated by the cloud management platform 20, the tenant may further select and purchase a virtual instance of a specific specification (processor, internal memory, and disk) through payment on the cloud management platform 20. After successful purchasing through payment, the cloud management platform 20 provides a remote login account and password of the purchased virtual instance, and the client 21 or the client 22 may remotely log in to the virtual instance, and install and run an application of the tenant on the virtual instance. The cloud management platform client receives a control plane command sent by the cloud management platform 20, creates a virtual instance on a host based on the control plane control command, and performs full life cycle management on the virtual instance. Therefore, the tenant may create, manage, log in to, and operate the virtual instance in the cloud data center 101 by using the cloud management platform 20.

With reference to the foregoing architecture of the cloud data center, the following describes a cloud system based on a public cloud service, packet processing, a configuration method based on a public cloud service, and a cloud management platform that are provided in embodiments of this application.

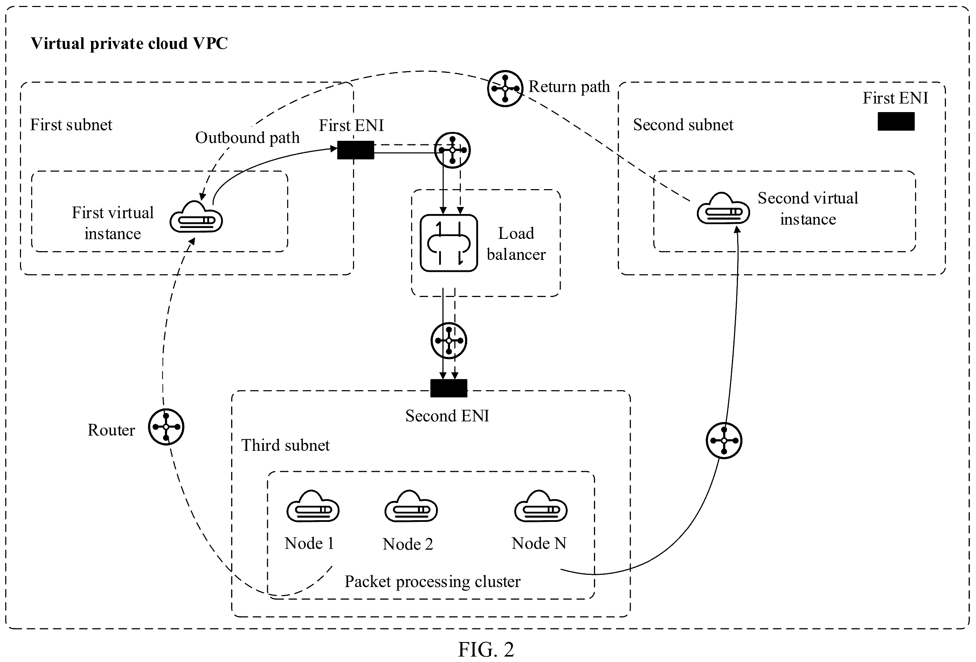

FIG. 2 is an architectural diagram of a cloud system based on a public cloud service according to an embodiment of this application. The cloud system is set on an infrastructure that provides a public cloud service, the infrastructure includes a plurality of data centers, each of the data centers is provided with at least one server, and the public cloud service runs on one or more servers of the infrastructure. Each data center may be implemented by a part or all of the cloud data center 101 shown in FIG. 1.

Refer to FIG. 2. The cloud system includes a virtual private cloud VPC and a load balancer.

The VPC includes a first subnet, a second subnet, a third subnet, and a router connected to the first subnet, the second subnet, and the third subnet. The first subnet is provided with a first virtual instance, the second subnet is provided with a second virtual instance, the third subnet is provided with a packet processing cluster, and the packet processing cluster includes a plurality of nodes on which a packet processing service is set, for example, a node 1 to a node N, where N is an integer not less than 1. The plurality of nodes may also be referred to as a plurality of backend service nodes.

The load balancer (which may also be referred to as a load balancing node) includes a first elastic network interface ENI and a second ENI. The first ENI is connected to both the first subnet and the second subnet, and the second ENI is connected to the third subnet. The first ENI is, for example, a northbound network interface, and the second ENI is, for example, a southbound network interface.

Both an IP address of the second ENI and IP addresses of the plurality of backend service nodes belong to a network segment of the third subnet.

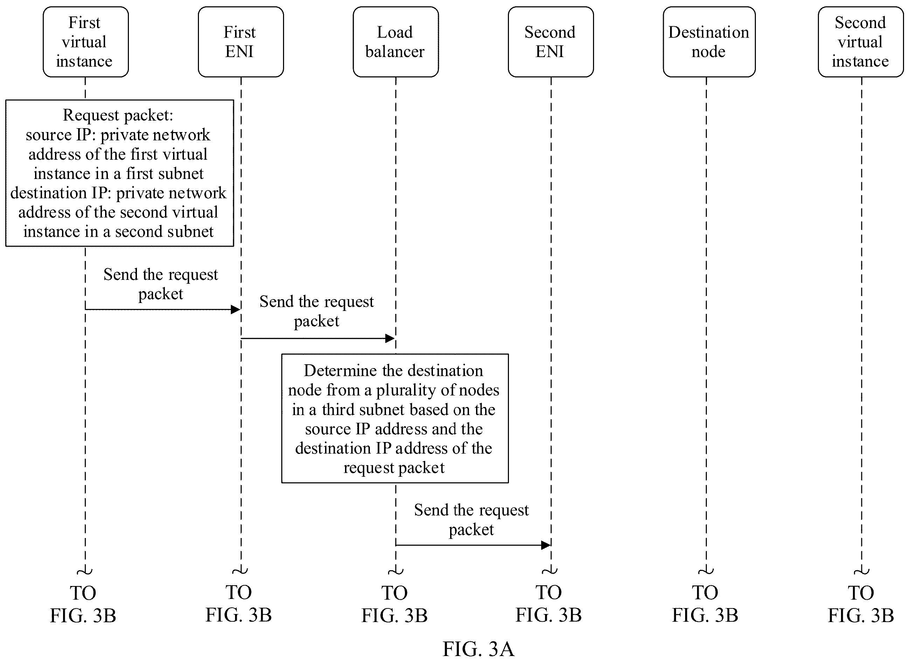

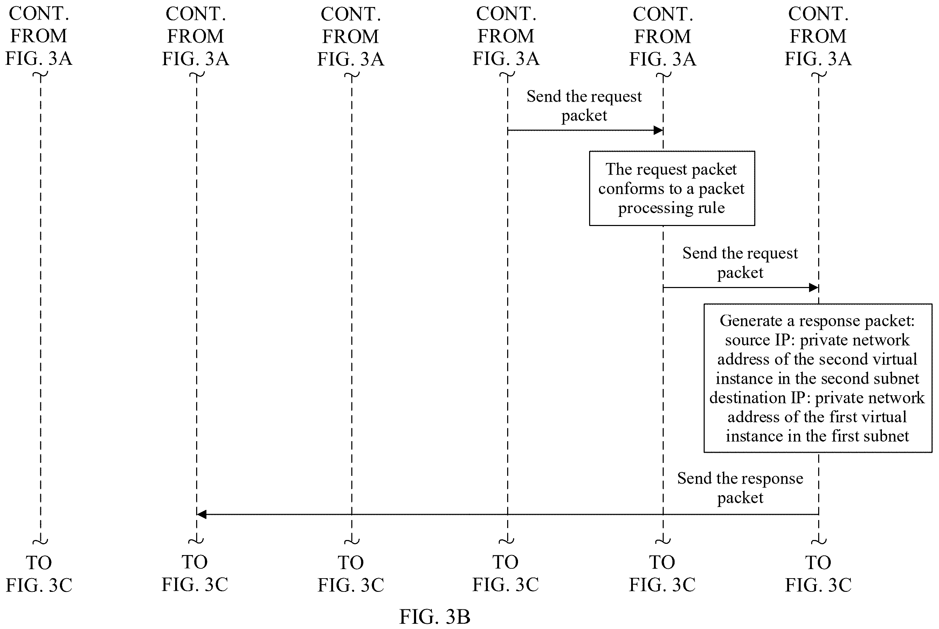

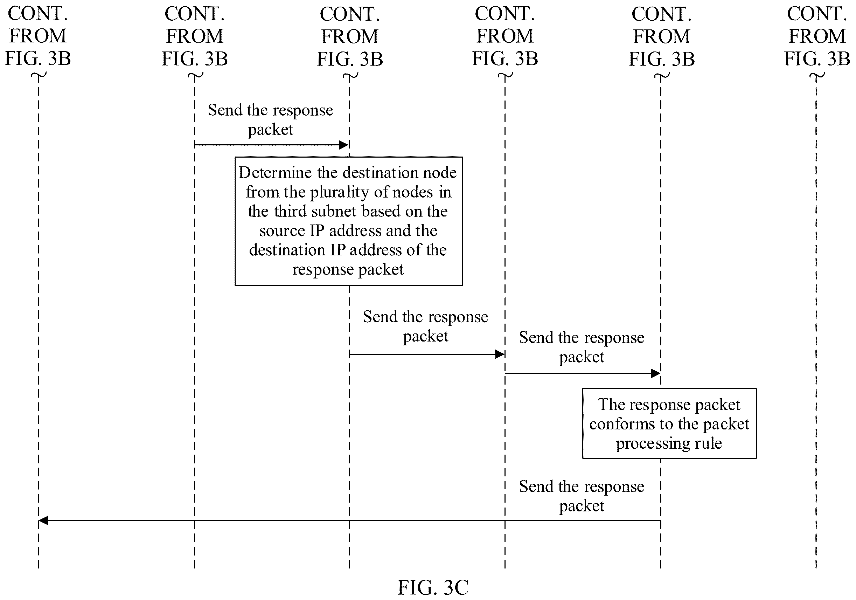

Based on the foregoing structure of the cloud system, an embodiment of this application further discloses a working procedure based on a cloud system. For details, refer to the following descriptions:
With reference to FIG. 3A to FIG. 3C, the working procedure of the cloud system provided in this embodiment of this application is specifically described. Refer to FIG. 3A to FIG. 3C. The working procedure includes an outbound path of a packet and an inbound path of the packet. The outbound path of the packet includes a processing process of a request packet, and the inbound path of the packet includes a processing process of a response packet.

In the outbound path of the packet, the first virtual instance sends a request packet to the first ENI, where a destination IP address of the request packet is a private network address of the second virtual instance in the second subnet, and a source IP address thereof is a private network address of the first virtual instance in the first subnet. The load balancer receives the request packet from the first ENI, determines a destination node from the plurality of nodes based on the source IP address and the destination IP address of the request packet, and sends the request packet to the destination node via the second ENI, where a packet processing rule defined by a tenant of the VPC is set on the destination node. When determining that the request packet conforms to the packet processing rule, the destination node sends the request packet to the second virtual instance by using the router based on the destination IP address of the request packet. The second virtual instance receives the request packet.

In the inbound path of the packet, the second virtual instance generates a response packet based on the request packet, and sends the response packet to the first ENI, where a destination IP address of the response packet is the private network address of the first virtual instance in the first subnet, and a source IP address thereof is the private network address of the second virtual instance in the second subnet. The load balancer receives the response packet from the first ENI, determines the destination node from the plurality of nodes based on the source IP address and the destination IP address of the response packet, and sends the response packet to the destination node via the second ENI. When determining that the response packet conforms to the packet processing rule, the destination node sends the response packet to the first virtual instance by using the router based on the destination IP address of the response packet.

It should be understood that, in an outbound path and an inbound path, a packet may pass through a same destination node in the third subnet, or may pass through different destination nodes in the third subnet. That is, the request packet and the response packet may pass through a same destination node, or may pass through different destination nodes.

For example, the source IP address and the destination IP address of the request packet are set in a quintuple of the request packet, and the quintuple further includes a source port, a destination port, and a transport layer protocol of the request packet. The load balancer performs an operation on the quintuple of the request packet based on a bidirectional consistent hashing algorithm, and determines the destination node from the plurality of nodes based on a first operation result generated from the operation. Correspondingly, the source IP address and the destination IP address of the response packet are set in a quintuple of the response packet, and the quintuple further includes a source port, a destination port, and a transport layer protocol of the response packet. The load balancer performs an operation on the quintuple of the response packet based on the bidirectional consistent hashing algorithm, and determines the destination node from the plurality of nodes based on a second operation result generated from the operation, where a value of the first operation result is the same as a value of the second operation result. In this way, a destination node that the request packet passes through is the same as a destination node that the response packet passes through.

For another example, the load balancer performs an operation on each of the quintuples of the request packet and the response packet based on a non-bidirectional consistent hashing algorithm or another hashing algorithm, and values of a first operation result and a second operation result that are generated from the operation may be different. In this way, a destination node that the request packet passes through may be different from a destination node that the response packet passes through.

Optionally, the packet processing rule includes a firewall packet filtering rule, a security group rule, or another processing rule.

The destination node is further configured to: discard the request packet when determining that the request packet does not conform to the packet processing rule, and/or discard the response packet when determining that the response packet does not conform to the packet processing rule. For example, the packet processing rule is a firewall packet filtering rule. The destination node is a firewall node. When the firewall node determines that the request packet does not conform to the firewall packet filtering rule, it indicates that the request packet is an abnormal packet, and the firewall node discards the request packet.

In this embodiment of this application, before sending the request packet to the destination node via the second ENI, the load balancer modifies a destination MAC address of the request packet to a MAC address of the destination node, and modifies a source MAC address thereof to a MAC address of the second ENI. Similarly, before sending the response packet to the destination node via the second ENI, the load balancer modifies a destination MAC address of the response packet to the MAC address of the destination node, and modifies a source MAC address thereof to the MAC address of the second ENI. In this way, the MAC address is modified, so that the load balancer can send the packet (the request packet or the response packet) to the destination node via the second ENI through layer-2 forwarding without encapsulating an additional virtual local area network (virtual local area network, VLAN) packet header based on an additional overlay protocol. After receiving the packet, the destination node may obtain a quintuple of the packet without performing additional decapsulation, to continue to transmit the packet based on the quintuple.

However, in a related technology, the load balancer further needs to additionally encapsulate a VLAN packet header into the packet, and transmit the packet through an overlay tunnel between the load balancer and the destination node. Correspondingly, after receiving the packet, the destination node further needs to additionally decapsulate the VLAN packet header to obtain the quintuple of the packet.

It should be noted that content of the foregoing working procedure of the cloud system is merely an example for description, and content of the working procedure of the cloud system is not limited herein.

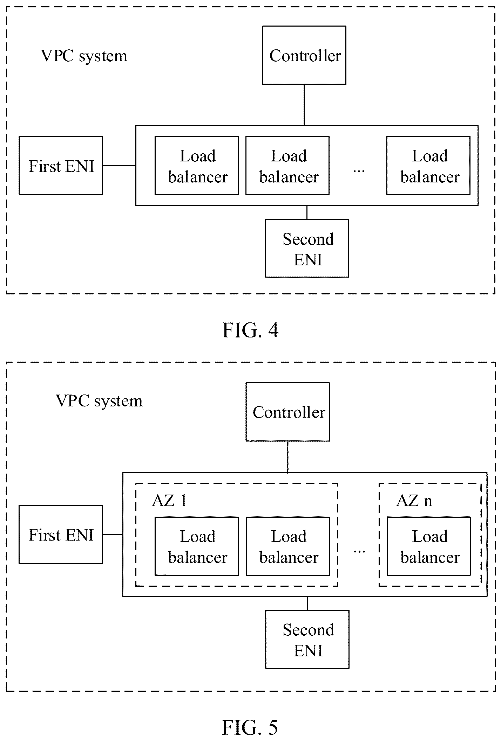

It may be learned from the foregoing descriptions of the working procedure of the cloud system that a key point of this solution lies in packet processing logic of the packet processing cluster and the load balancer in the VPC. Based on this, an embodiment of this application further discloses a VPC system. The following describes the VPC system with reference to FIG. 4 and FIG. 5.

FIG. 4 is an architectural diagram of a VPC system according to an embodiment of this application. The VPC system is a part of the foregoing cloud system. Refer to FIG. 4. The VPC system includes a controller, a plurality of load balancers, a packet processing cluster (not shown), and a first ENI and a second ENI of the plurality of load balancers. The controller is configured to select, based on a load balancing policy, one load balancer from the plurality of load balancers to process the foregoing request packet or response packet. Correspondingly, the plurality of load balancers are configured to share tenant traffic based on the load balancing policy.

The controller may be a software-defined networking (software-defined networking, SDN) controller or a controller in another form.

FIG. 5 is an architectural diagram of another VPC system according to an embodiment of this application. A difference between FIG. 5 and FIG. 4 lies in that the plurality of load balancers shown in FIG. 5 are distributed in at least two availability zones (availability zone, AZ), the at least two AZs include a first AZ, and the first ENI is located in the first AZ. The controller is specifically configured to: determine, from the plurality of load balancers based on identifier information of the first AZ, a load balancer located in the first AZ, and select a load balancer from the load balancer located in the first AZ, to process the foregoing request packet or response packet.

In this embodiment of this application, the cloud system further includes a cloud management platform (not shown in FIG. 2). The cloud management platform is configured to: receive one or more public cloud service configuration instructions that are input by the tenant, and create the VPC, the load balancer, and the packet processing cluster on the infrastructure according to the one or more public cloud service configuration instructions. The cloud management platform may be the cloud management platform shown in FIG. 1.

Both the load balancer and the cloud management platform may be implemented by using software or hardware. For example, the following uses the load balancer as an example to describe an implementation of the load balancer. Similarly, for an implementation of the cloud management platform, refer to the implementation of the load balancer.

A module is used as an example of a software functional unit, and the load balancer may include code that runs on a computing instance. The computing instance may be at least one of computing devices such as a physical host (computing device), a virtual machine, and a container. Further, there may be one or more computing devices. For example, the load balancer may include code that runs on a plurality of hosts/virtual machines/containers. It should be noted that the plurality of hosts/virtual machines/containers configured to run the application program may be distributed in a same region (region), or may be distributed in different regions. The plurality of hosts/virtual machines/containers configured to run the code may be distributed in a same AZ, or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed in a same load balancer, or may be distributed in a plurality of load balancers. Generally, one load balancer is set in one region. For cross-region communication between two load balancers in a same region and between load balancers in different regions, a communication gateway needs to be set in each load balancer, to implement interconnection between the load balancers by using the communication gateway.

A module is used as an example of a hardware functional unit, and the load balancer may include at least one computing device such as a server. Alternatively, the load balancer may be a device implemented by using an application-specific integrated circuit (application-specific integrated circuit, ASIC) or a programmable logic device (programmable logic device, PLD), or the like. The PLD may be implemented by a complex programmable logic device (complex programmable logic device, CPLD), a field-programmable gate array (field-programmable gate array, FPGA), generic array logic (generic array logic, GAL), or any combination thereof.

The plurality of computing devices included in the load balancer may be distributed in a same region, or may be distributed in different regions. The plurality of computing devices included in the load balancer may be distributed in a same AZ, or may be distributed in different AZs. Similarly, the plurality of computing devices included in the load balancer may be distributed in a same load balancer, or may be distributed in a plurality of load balancers. The plurality of computing devices may be any combination of computing devices such as a server, an ASIC, a PLD, a CPLD, an FPGA, or GAL.

It should be understood that the network architecture, the system architecture, and the service scenarios described in embodiments of this application are intended to describe the technical solutions in embodiments of this application more clearly, and do not constitute a limitation on the technical solutions provided in embodiments of this application. A person of ordinary skill in the art may know that, with the evolution of the network architecture and the system architecture and the emergence of new service scenarios, the technical solutions provided in embodiments of this application are also applicable to similar technical problems.

The following describes a packet processing method based on a public cloud service provided in an embodiment of this application.

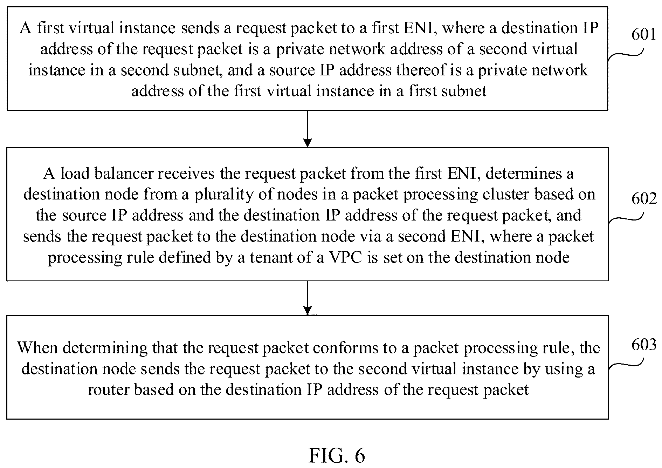

FIG. 6 is a flowchart of a packet processing method based on a public cloud service according to an embodiment of this application. The method is applied to an infrastructure that provides a public cloud service. The infrastructure includes a VPC and a load balancer. The VPC includes a first subnet, a second subnet, a third subnet, and a router connected to the first subnet, the second subnet, and the third subnet. The first subnet is provided with a first virtual instance, the second subnet is provided with a second virtual instance, the third subnet is provided with a packet processing cluster, the packet processing cluster includes a plurality of nodes on which a packet processing service is set, and the load balancer includes a first ENI and a second ENI. The first ENI is connected to both the first subnet and the second subnet, and the second ENI is connected to the third subnet. Refer to FIG. 6. The method includes the following steps.

**Step 601:** The first virtual instance sends a request packet to the first ENI, where a destination IP address of the request packet is a private network address of the second virtual instance in the second subnet, and a source IP address thereof is a private network address of the first virtual instance in the first subnet.

It may be learned from the foregoing descriptions that this solution includes an outbound path and an inbound path of a packet, and step 601 to step 603 correspond to the outbound path of the packet, namely, a processing process of the request packet.

A tenant expects to send the request packet to the second virtual instance in the second subnet by using the first virtual instance in the first subnet, and the first virtual instance first sends the request packet to the first ENI of the load balancer in a cloud system. The first ENI is a northbound network interface, and the northbound network interface is used as a user traffic ingress and is configured to receive user traffic.

The source IP address of the request packet is the private network address of the first virtual instance in the first subnet, and the destination IP address thereof is the private network address of the second virtual instance in the second subnet.

Generally, the request packet further includes a source MAC address and a destination MAC address. The source MAC address in the request packet obtained by the first virtual instance is a MAC address of the first virtual instance, and the destination MAC address therein is a MAC address of the first ENI. In addition, the request packet further includes a source port, a destination port, a transport layer protocol, a payload, and the like. The source IP address, the destination IP address, the source port, the destination port, and the transport layer protocol constitute a quintuple of the request packet. For related descriptions of the quintuple, refer to a related technology. Details are not described herein.

**Step 602:** The load balancer receives the request packet from the first ENI, determines a destination node from the plurality of nodes in the packet processing cluster based on the source IP address and the destination IP address of the request packet, and sends the request packet to the destination node via the second ENI, where a packet processing rule defined by a tenant of the VPC is set on the destination node.

After the first virtual instance sends the request packet to the first ENI, the load balancer receives the request packet from the first ENI. The load balancer parses the request packet to obtain the source IP address and the destination IP address of the request packet. The load balancer determines the destination node from the plurality of nodes in the packet processing cluster based on the source IP address and the destination IP address of the request packet.

It may be learned from the foregoing descriptions that the source IP address and the destination IP address of the request packet are set in the quintuple of the request packet, and the quintuple further includes the source port, the destination port, and the transport layer protocol of the request packet. Based on this, the load balancer performs an operation on the quintuple of the request packet based on a bidirectional consistent hashing algorithm, and determines the destination node from the plurality of nodes based on a first operation result generated from the operation.

For example, the consistent hashing algorithm is used to organize entire hash space into a virtual ring in a clockwise direction. The virtual ring is referred to as a hash ring, and the hash ring has 2³² values in total. A location of each of the plurality of nodes on the hash ring is determined by using the hashing algorithm based on an IP address, a host name, or other information of each of the plurality of nodes, to allocate the entire hash space to the plurality of nodes. The load balancer performs an operation on the quintuple of the request packet by using the bidirectional consistent hashing algorithm, to obtain a hash value, determines a location, on the hash ring, of a value obtained after a modulo operation is performed on the hash value by 2³², and searches for a node in the clockwise direction from the determined location, where a first encountered node is denoted as the destination node.

The consistent hashing algorithm only needs to re-locate locations of some nodes on the hash ring during node addition or deletion, and does not need to adjust locations of all nodes on the hash ring. Therefore, the consistent hashing algorithm has good fault tolerance and scalability. For descriptions of the consistent hashing algorithm, refer to the related technology.

Certainly, the load balancer may select, in another manner, one node from the plurality of nodes as the destination node corresponding to the request packet. For example, a node is selected by using a conventional hashing algorithm, selected randomly, or selected sequentially.

After determining the destination node, the load balancer sends the request packet to the destination node via the second ENI.

In this embodiment of this application, before sending the request packet to the destination node via the second ENI, the load balancer modifies the destination MAC address of the request packet to a MAC address of the destination node, and modifies the source MAC address thereof to a MAC address of the second ENI. In this way, the second ENI may transmit the request packet to the destination node through layer-2 forwarding, and after receiving the request packet, the destination node may parse the request packet based on a conventional communication protocol. This solution ensures load balancing and reliability of a user service without requiring the tenant to perform any additional development on the node set up by the tenant.

However, in the related technology, the load balancer further needs to additionally encapsulate a VLAN packet header into the packet, and transmit the packet through an overlay tunnel that is additionally created between the load balancer and the destination node. Correspondingly, a kernel module needs to be additionally developed for a plurality of nodes of the tenant, to identify an overlay-encapsulated packet sent by the load balancer. That is, after receiving the packet, the destination node further needs to additionally decapsulate the VLAN packet header to obtain the quintuple of the packet and send the packet to a user-mode process for processing. In addition, in the related technology, because the additional overlay tunnel and VLAN encapsulation are required, additional tunnel information and session information in the tunnel further need to be recorded. This causes a session performance problem. When a session exceeds a processing capability of a node, node failure is caused. It may be learned that the related technology has a relatively high requirement on the tenant. However, most tenants only deploy a service on a backend service node, and do not change or even understand a kernel behavior of the node. This is not conducive to promotion and use of the related technology. However, this solution can reduce these problems.

Optionally, the load balancer determines, based on identifier information of the destination node, a first instance to which the destination node belongs; the load balancer searches, based on identifier information of the first instance, a plurality of mapping relationships for a first mapping relationship corresponding to the first instance; and the load balancer searches the first mapping relationship for the MAC address of the destination node, where the first mapping relationship includes MAC addresses of the plurality of nodes.

It may be learned from the foregoing descriptions that the cloud system further includes a cloud management platform. The cloud management platform receives a first instance setup request (including at least one public cloud service configuration instruction) that is input by the tenant, where the first instance setup request indicates the plurality of nodes in the packet processing cluster. The cloud management platform sets up the first instance in the first subnet based on the first instance setup request, and generates the first mapping relationship, where the first instance includes the plurality of nodes. That is, in a process of setting up an instance in the first subnet of the VPC, a mapping relationship that stores a MAC address of a corresponding node is generated. In this way, a corresponding mapping relationship is subsequently searched for the MAC address of the destination node based on an identifier of an instance. It should be understood that one instance may correspond to one mapping relationship.

In addition, the cloud management platform receives a load balancing service request (including at least one public cloud service configuration instruction) that is input by the tenant, where the load balancing service request indicates the third subnet, and the cloud management platform creates, based on the load balancing service request, the second ENI whose IP address belongs to the third subnet. That is, in a process in which the user requests to obtain a load balancing service provided by the VPC system, an ENI that belongs to a same subnet as a backend service node of the tenant is created.

In some embodiments, the tenant may request to set up an instance when requesting to obtain the load balancing service. In this way, the load balancing service request and the first instance setup request may be a same request. In some other embodiments, the tenant may first request to obtain the load balancing service, and then request to set up an instance. In this way, the load balancing service request and the first instance setup request are different requests.

The second ENI in this specification is a southbound network interface, and the southbound network interface is used as a user traffic egress, and is configured to send user traffic to the backend service node of the tenant.

To ensure reliability of a user service, there are a plurality of load balancers, and the plurality of load balancers are configured to share tenant traffic based on a load balancing policy. In an implementation, the plurality of load balancers correspond to a controller. After the first ENI receives the request packet, the controller selects, based on the load balancing policy, one load balancer from the plurality of load balancers to process the request packet, so that the selected load balancer performs step 602. Certainly, the controller may select the load balancer based on another policy, for example, randomly or sequentially.

It may be learned from the foregoing descriptions that the plurality of load balancers may be distributed in at least two AZs, the at least two AZs include a first AZ, and the first ENI is located in the first AZ. Based on this, the controller determines, from the plurality of load balancers based on identifier information of the first AZ, a load balancer located in the first AZ, and selects a load balancer from the load balancer located in the first AZ, so that the selected load balancer performs step 602. That is, the controller selects the load balancer based on a proximity principle. In this way, packet processing efficiency can be improved, and overall performance can be improved.

If there is more than one load balancer located in the first AZ, the controller may select, based on any load balancing policy or another policy, one load balancer from the load balancer located in the first AZ.

Step 603: When determining that the request packet conforms to the packet processing rule, the destination node sends the request packet to the second virtual instance by using the router based on the destination IP address of the request packet.

The packet processing rule defined by the tenant of the VPC is set on the destination node. The packet processing rule includes a firewall packet filtering rule, a security group rule, or another rule.

For example, the packet processing rule includes the firewall packet filtering rule. When determining that the request packet conforms to the firewall packet filtering rule, the destination node sends the request packet to the second virtual instance by using the router based on the destination IP address of the request packet.

It may be learned from the foregoing descriptions that, after receiving the request packet, the destination node may obtain the quintuple of the request packet by parsing the request packet based on a conventional communications protocol, including the destination IP address and the like. The destination node determines, by looking up a routing table, that a next-hop network device to the destination IP address is a router, and transmits the request packet to the second virtual instance by using the router.

The destination node discards the request packet when determining that the request packet does not conform to the packet processing rule.

For example, the packet processing rule includes the firewall packet filtering rule. When the destination node determines that the request packet does not conform to the firewall packet filtering rule, it indicates that the request packet may be an abnormal packet, and the destination node discards the request packet, to ensure communication security of the tenant.

After the destination node sends the request packet to the second virtual instance, the second virtual instance receives the request packet, and generates a response packet based on the request packet. The following describes the processing process of the response packet, namely, the inbound path of the packet.

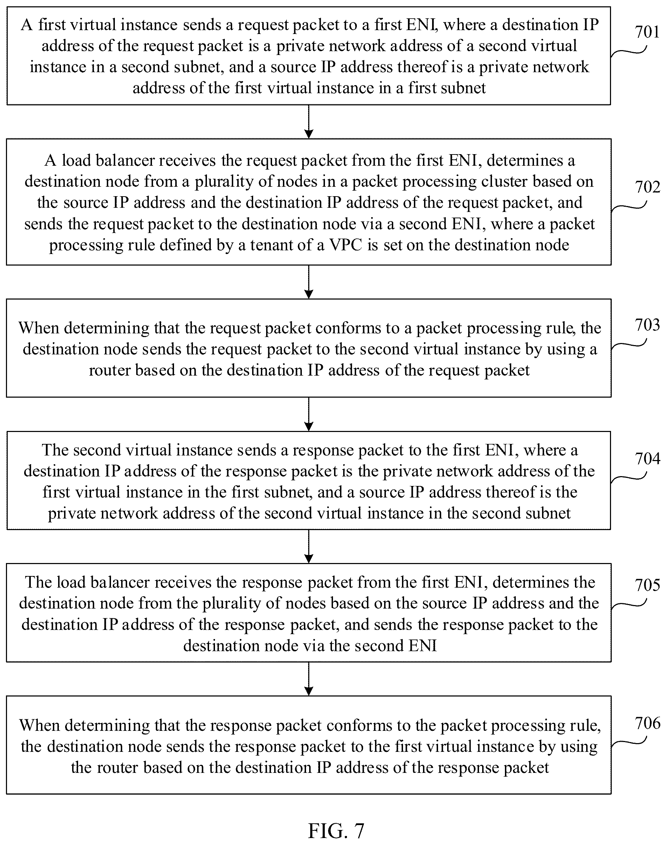

Refer to FIG. 7. The foregoing packet processing method based on a public cloud service further includes the following steps.

Specific content of step 701 to step 703 is similar to that of step 601 to step 603, and details are not described herein again.

Step 704: The second virtual instance sends a response packet to the first ENI, where a destination IP address of the response packet is the private network address of the first virtual instance in the first subnet, and a source IP address thereof is the private network address of the second virtual instance in the second subnet.

It should be understood that a process in which the second virtual instance sends the response packet to the first ENI is similar to a process in which the first virtual instance sends the request packet to the first ENI.

A source MAC address in the response packet generated by the second virtual instance is a MAC address of the second virtual instance, and a destination MAC address thereof is the MAC address of the first ENI. In addition, the response packet further includes a source port, a destination port, a transport layer protocol, a payload, and the like. The source IP address, the destination IP address, the source port, the destination port, and the transport layer protocol constitute a quintuple of the response packet.

Step 705: The load balancer receives the response packet from the first ENI, determines the destination node from the plurality of nodes based on the source IP address and the destination IP address of the response packet, and sends the response packet to the destination node via the second ENI.

After the second virtual instance sends the response packet to the first ENI, the load balancer receives the response packet from the first ENI. The load balancer parses the response packet to obtain the source IP address and the destination IP address of the response packet. The load balancer determines the destination node from the plurality of nodes in the packet processing cluster based on the source IP address and the destination IP address of the response packet.

It may be learned from the foregoing descriptions that the source IP address and the destination IP address of the response packet are set in the quintuple of the response packet, and the quintuple further includes the source port, the destination port, and the transport layer protocol of the response packet. Based on this, the load balancer performs an operation on the quintuple of the response packet based on the bidirectional consistent hashing algorithm, and determines the destination node from the plurality of nodes based on a second operation result generated from the operation. A value of the first operation result is the same as a value of the second operation result. In this way, the response packet and the request packet pass through a same destination node.

Certainly, the load balancer may select, in another manner, one node from the plurality of nodes as the destination node corresponding to the response packet. For example, a node is selected by using a conventional hashing algorithm, selected randomly, or selected sequentially.

After determining the destination node, the load balancer sends the response packet to the destination node via the second ENI.

In this embodiment of this application, before sending the response packet to the destination node via the second ENI, the load balancer modifies the destination MAC address of the response packet to the MAC address of the destination node, and modifies the source MAC address thereof to the MAC address of the second ENI. In this way, the second ENI may transmit the response packet to the destination node through layer-2 forwarding, and after receiving the response packet, the destination node may parse the response packet based on a conventional communication protocol. This solution ensures load balancing and reliability of a user service without requiring the tenant to perform any additional development on the node set up by the tenant.

Optionally, the load balancer determines, based on identifier information of the destination node, a first instance to which the destination node belongs; the load balancer searches, based on identifier information of the first instance, the foregoing plurality of mapping relationships for a first mapping relationship corresponding to the first instance; and the load balancer searches the first mapping relationship for the MAC address of the destination node, where the first mapping relationship includes MAC addresses of the plurality of nodes.

It may be learned from the foregoing descriptions that, to ensure reliability of a user service, there are plurality of load balancers, the plurality of load balancers are used to share tenant traffic, and the plurality of load balancers correspond to a controller. In an implementation, after the first ENI receives the response packet, the controller selects, based on the load balancing policy, one load balancer from the plurality of load balancers to process the response packet, so that the selected load balancer performs step 605. Certainly, the controller may select the load balancer based on another policy, for example, randomly or sequentially.

When the plurality of load balancers are located in a plurality of AZs, the controller may select a load balancer based on a proximity principle similar to that described in step 602, to improve packet processing efficiency.

Step 706: When determining that the response packet conforms to the packet processing rule, the destination node sends the response packet to the first virtual instance by using the router based on the destination IP address of the response packet.

For example, the packet processing rule includes the firewall packet filtering rule. When determining that the response packet conforms to the firewall packet filtering rule, the destination node sends the response packet to the first virtual instance by using the router based on the destination IP address of the response packet.

It may be learned from the foregoing descriptions that, after receiving the response packet, the destination node may obtain the quintuple of the response packet by parsing the response packet based on a conventional communications protocol, including the destination IP address and the like. The destination node determines, by looking up a routing table, that a next-hop network device to the destination IP address is a router, and transmits the response packet to the first virtual instance by using the router.

The destination node discards the response packet when determining that the response packet does not conform to the packet processing rule.

For example, the packet processing rule includes the firewall packet filtering rule. When the destination node determines that the response packet does not conform to the firewall packet filtering rule, it indicates that the response packet may be an abnormal packet, and the destination node discards the response packet, to ensure communication security of the tenant.

To improve reliability of this solution, the load balancer periodically detects connectivity between each of the foregoing plurality of nodes and the load balancer, and maintains node information of the plurality of nodes based on the connectivity. The connectivity indicates whether a corresponding node is abnormal. Simply speaking, the load balancer can perform health check on the plurality of nodes.

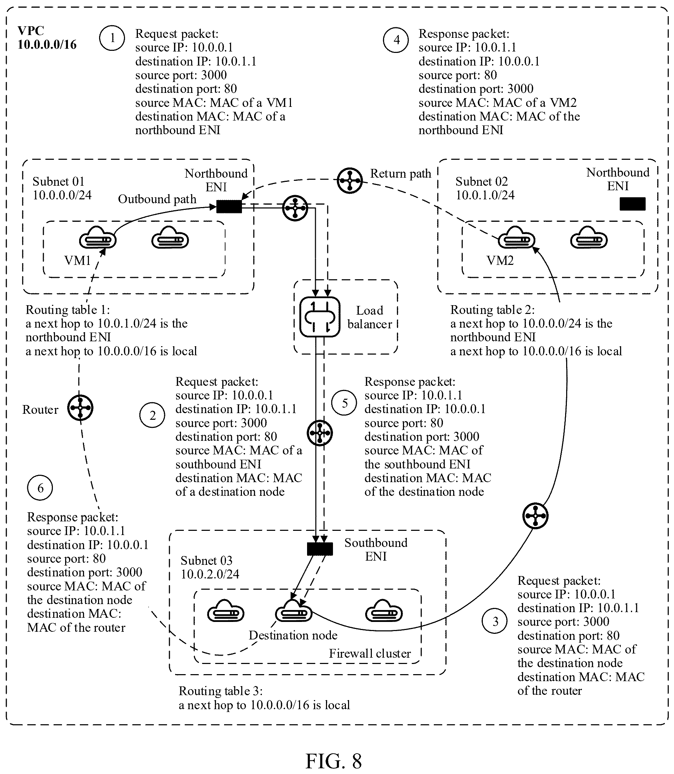

With reference to FIG. 8, the following describes, by using an example, a packet processing method based on a public cloud service provided in an embodiment of this application.

FIG. 8 is a flowchart of still another packet processing method based on a public cloud service according to an embodiment of this application. In FIG. 8, a private network address/subnet mask of a VPC is, for example, 10.0.0.0/16, and three subnets are deployed in the VPC, including a subnet 01, a subnet 02, and a subnet 03. Private network addresses/subnet masks of the subnets 01, 02, and 03 are respectively 10.0.0.1/24, 10.0.1.0/24, and 10.0.2.0/24. A tenant creates at least one virtual instance in the subnet 01, including a VM 1, creates at least one virtual instance in the subnet 02, including a VM 2, and creates a firewall cluster in the subnet 03. The firewall cluster is used as a packet processing cluster. The firewall cluster includes a plurality of firewall nodes. A firewall packet filtering rule is set on each firewall node. In the VPC system, a first ENI is a northbound ENI, and a second ENI is a southbound ENI, where both an IP address of the southbound ENI and an IP address of the firewall cluster belong to a network segment corresponding to the subnet 03.

A routing table 1, a routing table 2, and a routing table 3 are respectively configured on the subnet 01, the subnet 02, and the subnet 03. The routing table 1 indicates that a next hop to '10.0.1.0/24' is the northbound ENI, and a next hop to '10.0.0.0/16' is local (local). The routing table 2 indicates that a next hop to '10.0.0.0/24' is the northbound ENI, and a next hop to '10.0.0.0/16' is local. The routing table 3 indicates that a next hop to '10.0.0.0/16' is local.

When the VM 1 in the subnet 01 accesses the VM 2 in the subnet 02, traffic needs to be filtered by the firewall cluster deployed in the subnet 03. Traffic returned from the VM 2 in the subnet 02 to the VM 1 in the subnet 01 also needs to be filtered by the firewall cluster, and packets of a same flow needs to pass through a same firewall node in an outbound path and an inbound path.

The example includes the following steps:
a1: When the tenant purchases a routed load balancing service in the VPC, the VPC system connects the northbound ENI to the subnet 01 and the southbound ENI to the subnet 03 based on a load balancing service request of the tenant.
a2: Based on an instance creation request of the tenant, the VPC system sets a firewall cluster in the subnet 03, and configures health check for the firewall cluster.
a3: A consistent hashing algorithm is set on a load balancer, and a bidirectional consistent hashing algorithm is selected.
a4: The routing table of the subnet 01 is configured, so that a next hop to the subnet 02 is the northbound ENI, and the routing table of the subnet 02 is configured, so that a next hop to the subnet 01 is the northbound ENI.
b1: A request packet from the VM 1 in the subnet 01 is transmitted to the load balancer via the northbound ENI. In the request packet obtained by the VM 1, a source IP address is 10.0.0.1, a destination IP address is 10.0.1.1, a source port is 3000, a destination port is 80, a source MAC address is a MAC address of the VM 1, and a destination MAC address is a MAC address of the northbound ENI. 10.0.0.1 is a private network address of the VM 1, and 10.0.1.1 is a private network address of the VM 2.
b2: The load balancer selects a firewall node as a destination node based on the request packet and a bidirectional consistent hashing algorithm, for example, selects a firewall 01 as the destination node.
b3: The load balancer modifies the source MAC address of the request packet to a MAC address of the southbound ENI, and modifies the destination MAC address thereof to a MAC address of the destination node.
b4: The load balancer sends the request packet to the destination node via the southbound ENI through layer-2 forwarding.
b5: The destination node may address the VM 2 in the subnet 02 based on the destination IP address of the request packet.
c1: The VM 2 generates a response packet based on the request packet, where the response packet is transmitted to the load balancer via the northbound ENI. In the response packet generated by the VM 2, a source IP address is 10.0.1.1, a destination IP address is 10.0.0.1, a source port is 80, a destination port is 3000, a source MAC address is a MAC address of the VM 2, and a destination MAC address is the MAC address of the northbound ENI.
c2: The load balancer still selects the firewall 01 as the destination node based on the response packet and the bidirectional consistent hashing algorithm.
c3: The load balancer modifies the source MAC address of the response packet to the MAC address of the southbound ENI, and modifies the destination MAC address thereof to the MAC address of the destination node.
c4: The load balancer sends the response packet to the destination node via the southbound ENI through layer-2 forwarding.
c5: The destination node may address the VM 1 in the subnet 01 based on the destination IP address of the response packet.

It may be learned from the foregoing descriptions that, in this solution, traffic diversion is performed based on IP routing in a cloud scenario, that is, a packet is processed based on an IP address. The load balancer can select a next-hop node (namely, the destination node) based on the bidirectional consistent hashing algorithm, and can send the packet to the next-hop node through layer-2 forwarding by modifying the MAC address of the packet, without additional tunnel encapsulation.

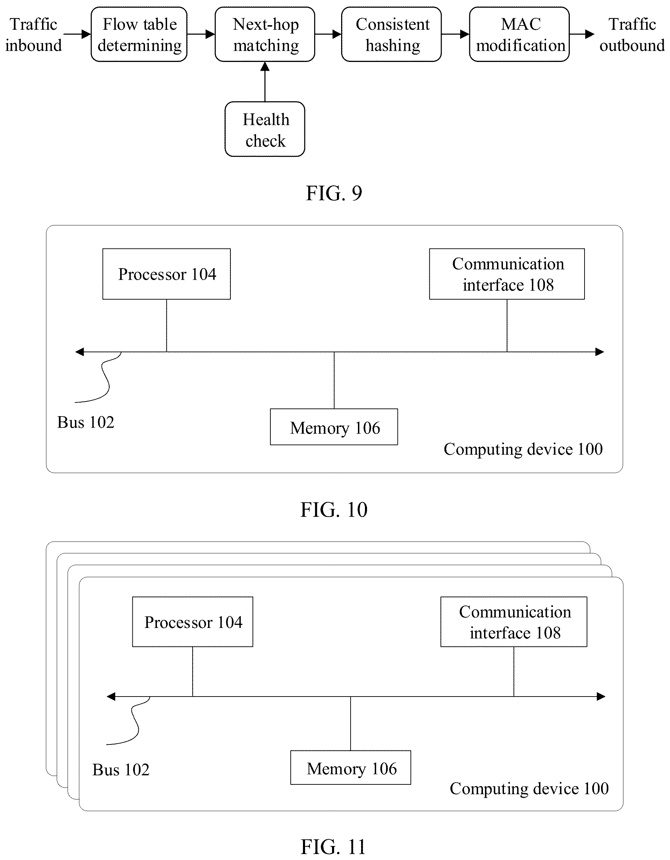

FIG. 9 is a diagram of processing logic of a load balancer according to an embodiment of this application. The load balancer has a built-in flow table determining module, health check module, bidirectional consistent hashing algorithm, and the like. Refer to FIG. 9. After the load balancer obtains traffic (for example, after the load balancer receives a request packet or a response packet via a first ENI), that is, after traffic inbound, the load balancer looks up a routing table by using the flow table determining module, to obtain a next-hop node through matching, determines a destination node based on the bidirectional consistent hashing algorithm, and then modifies a MAC address, that is, modifies a destination MAC address of the packet to a MAC address of the destination node, and modifies a source MAC address thereof to a MAC address of a southbound ENI. After modifying the MAC address, the load balancer performs a traffic outbound operation, that is, sends the packet to the destination node via the southbound ENI. In addition, the load balancer uses the health check module to check connectivity between the load balancer and a plurality of nodes in real time.

In conclusion, in this embodiment of this application, the cloud system may be used by a tenant to set up a load balancer, a packet processing cluster including a plurality of nodes, and the like, so that tenant traffic is distributed to a plurality of next hops by using the load balancer, that is, distributed to the plurality of nodes, thereby improving communication reliability. Further, in this solution, the tenant does not need to perform additional overlay protocol configuration on the load balancer and the packet processing cluster, thereby simplifying an operation of the tenant, improving practicability of the cloud system, and improving performance of the cloud system. In a specific implementation, a southbound-northbound separation structure is introduced. The southbound ENI is deeply deployed into the backend group. That is, the southbound ENI and the backend service node of the tenant belong to a network segment of a same subnet. A packet can be directly sent from the load balancer to the backend service node via the southbound ENI through layer-2 forwarding. This avoids other overlay protocol encapsulation between the load balancer and the backend service node of the tenant, and simplifies the scenario. The consistent hashing algorithm, the bidirectional consistent hashing algorithm, or the like is introduced, so that information such as tunnel information and session information that are based on another overlay protocol is not additionally recorded. This helps improve performance, simplify configuration of the load balancer, and improve reliability.

An embodiment of this application further provides a computing device 100. As shown in FIG. 10, the computing device 100 includes a bus 102, a processor 104, a memory 106, and a communication interface 108. The processor 104, the memory 106, and the communication interface 108 communicate with each other through the bus 102. The computing device 100 may be a server or a terminal device. It should be understood that quantities of processors and memories of the computing device 100 are not limited in this embodiment of this application.

The bus 102 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, the bus is represented by using only one line in FIG. 10, but it does not mean that there is only one bus or only one type of bus. The bus 102 may include a path for transmitting information between components (for example, the memory 106, the processor 104, and the communication interface 108) of the computing device 100.

The processor 104 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 106 may include a volatile memory (volatile memory), for example, a random access memory (random access memory, RAM). The processor 104 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 106 stores executable program code. The processor 104 executes the executable program code to separately implement functions of the load balancer, the backend service node, and the like, so as to implement the packet processing method based on a public cloud service provided in embodiments of this application. In other words, the memory 106 stores instructions used to perform the packet processing method based on a public cloud service provided in embodiments of this application.

Alternatively, the memory 106 stores executable code, and the processor 104 executes the executable code to separately implement functions of the load balancer, the controller, the backend service node, or the like, so as to implement the packet processing method based on a public cloud service provided in embodiments of this application. In other words, the memory 106 stores instructions used to perform the packet processing method based on a public cloud service provided in embodiments of this application.

The communication interface 108 implements communication between the computing device 100 and another device or a communication network by using a transceiver module, for example, but not limited to a network interface card or a transceiver.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

As shown in FIG. 11, the computing device cluster includes at least one computing device 100. The memory 106 in the one or more computing devices 100 in the computing device cluster may store same instructions used to perform the packet processing method based on a public cloud service provided in embodiments of this application.

In some possible implementations, the memory 106 in the one or more computing devices 100 in the computing device cluster may alternatively separately store some instructions used to perform the packet sending method provided in embodiments of this application. In other words, a combination of the one or more computing devices 100 may jointly execute instructions used to perform the packet sending method provided in embodiments of this application.

It should be noted that memories 106 in different computing devices 100 in the computing device cluster may store different instructions that are separately used to perform some functions of the load balancer. In other words, the instructions stored in the memories 106 in different computing devices 100 may implement functions of one or more modules of the load balancer, the controller, the backend service node, and the like.

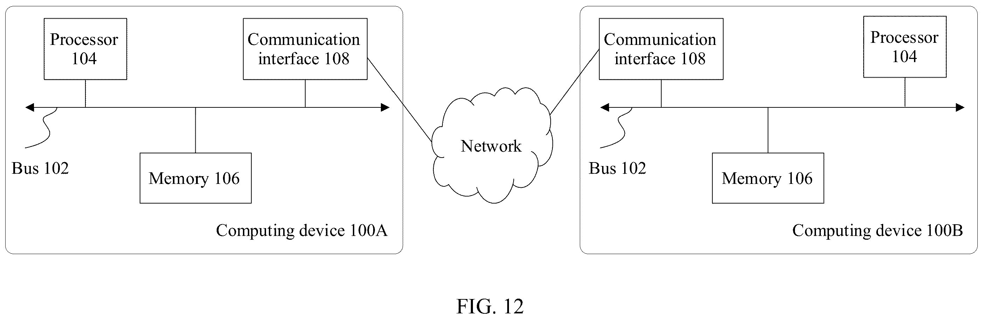

In some possible implementations, the one or more computing devices in the computing device cluster may be connected through a network. The network may be a wide area network, a local area network, or the like. FIG. 12 shows a possible implementation. As shown in FIG. 12, two computing devices 100A and 100B are connected through a network. Specifically, each computing device is connected to the network through a communication interface of the computing device. In such possible implementations, the memory 106 in the computing device 100A stores instructions for performing functions of the load balancer. In addition, the memory 106 in the computing device 100B stores instructions for performing functions of the plurality of backend service nodes.

A connection manner between computing device clusters shown in FIG. 12 may be implemented as follows: Considering that the packet processing method based on a public cloud service provided in embodiments of this application needs to ensure reliability of service load transmission and implement service load balancing, it is considered that functions implemented by the plurality of backend service nodes are performed by the computing device 100B.

It should be understood that functions of the computing device 100A shown in FIG. 12 may alternatively be completed by the plurality of computing devices 100. Similarly, functions of the computing device 100B may alternatively be completed by the plurality of computing devices 100.

An embodiment of this application further provides another computing device cluster. For a connection relationship between computing devices in the computing device cluster, refer to the connection manners of the computing device cluster in FIG. 11 and FIG. 12 similarly. A difference is that the memory 106 in the one or more computing devices 100 in the computing device cluster may store same instructions used to perform the packet processing method based on a public cloud service.

In some possible implementations, the memory 106 in the one or more computing devices 100 in the computing device cluster may alternatively separately store some instructions used to perform the packet processing method based on a public cloud service. In other words, a combination of the one or more computing devices 100 may jointly execute instructions used to perform the packet processing method based on a public cloud service.

It should be noted that memories 106 in different computing devices 100 in the computing device cluster may store different instructions used to perform some functions of the cloud system. In other words, the instructions stored in the memories 106 in different computing devices 100 may implement functions of one or more apparatuses of the load balancer, the controller, and the backend service node.

An embodiment of this application further provides a computer program product including instructions. The computer program product may be software or a program product that includes instructions and that can run on a computing device or be stored in any usable medium. When the computer program product is run on at least one computing device, the at least one computing device is caused to perform the packet processing method based on a public cloud service provided in embodiments of this application.

An embodiment of this application further provides a computer-readable storage medium. The computer-readable storage medium may be any usable medium that can be stored in a computing device, or a data storage device such as a data center, including one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid-state drive), or the like. The computer-readable storage medium includes instructions, and the instructions instruct a computing device to perform the packet processing method based on a public cloud service.

The following describes a configuration method based on a public cloud service provided in an embodiment of this application.

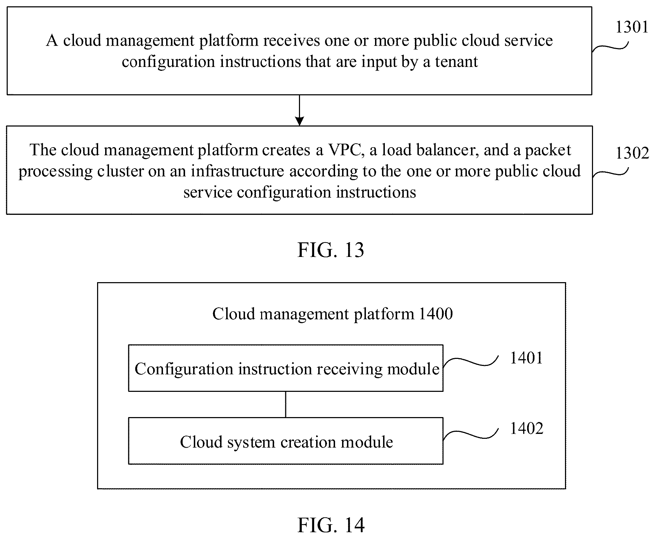

FIG. 13 is a flowchart of a configuration method based on a public cloud service according to an embodiment of this application. The configuration method is applied to a cloud management platform, and the cloud management platform may be the cloud management platform in any one of the foregoing embodiments. The cloud management platform is configured to manage an infrastructure that provides a public cloud service, the infrastructure includes a plurality of data centers, each of the data centers is provided with at least one server, and the public cloud service runs on one or more servers of the infrastructure. The method includes the following steps.

Step **1301:** The cloud management platform receives one or more public cloud service configuration instructions that are input by a tenant.

In this embodiment of this application, the tenant may input one or more public cloud service configuration instructions to the cloud management platform by using a client (for example, the client 21 or the client 22 in FIG. 1). The one or more public cloud service configuration instructions are used to instruct to create a VPC, a load balancer, a packet processing cluster, and the like on the infrastructure of the public cloud service.

The one or more public cloud service configuration instructions may be included in one or more requests, and the VPC, the load balancer, the packet processing cluster, and the like are created by using the one or more requests. For example, the one or more requests include a VPC creation request, a load balancing service setup request, and a first instance setup request. The VPC creation request indicates to create the VPC, the load balancing service set-up request indicates to create the load balancer, and the first instance setup request indicates to set up the packet processing cluster.

Step 1302: The cloud management platform creates the VPC, the load balancer, and the packet processing cluster on the infrastructure according to the one or more public cloud service configuration instructions.

The VPC includes a first subnet, a second subnet, a third subnet, and a router connected to the first subnet, the second subnet, and the third subnet. The first subnet is provided with a first virtual instance, the second subnet is provided with a second virtual instance, the third subnet is provided with a packet processing cluster, the packet processing cluster includes a plurality of nodes on which a packet processing service is set, the load balancer includes a first ENI and a second ENI, the first ENI is connected to both the first subnet and the second subnet, and the second ENI is connected to the third subnet.

The VPC, the load balancer, and the packet processing cluster in this embodiment of this application may be the VPC, the load balancer, and the packet processing cluster in any one of the foregoing embodiments. Corresponding functions of the VPC, the load balancer, the packet processing cluster, and the like are not described herein again.

In this embodiment of this application, the cloud system may be used by a tenant to set up a load balancer, a packet processing cluster including a plurality of nodes, and the like, so that tenant traffic is distributed to a plurality of next hops by using the load balancer, that is, distributed to the plurality of nodes, thereby improving communication reliability. Further, in this solution, the tenant does not need to perform additional overlay protocol configuration on the load balancer and the packet processing cluster, thereby simplifying an operation of the tenant, improving practicability of the cloud system, and improving performance of the cloud system.

FIG. 14 is a diagram of a structure based on a cloud management platform 1400 according to an embodiment of this application. The cloud management platform 1400 may be implemented as a part or all of an infrastructure of a cloud system by using software, hardware, or a combination thereof. The infrastructure of the cloud system may be the infrastructure of any cloud system in the foregoing embodiments. The cloud management platform is configured to manage an infrastructure that provides a public cloud service, the infrastructure includes a plurality of data centers, each of the data centers is provided with at least one server, and the public cloud service runs on one or more servers of the infrastructure. Refer to FIG. 14. The cloud management platform 1400 includes:
a configuration instruction receiving module 1401, configured to receive one or more public cloud service configuration instructions that are input by a tenant; and
a cloud system creation module 1402, configured to a VPC, a load balancer, and a packet processing cluster on the infrastructure according to the one or more public cloud service configuration instructions.

The VPC includes a first subnet, a second subnet, a third subnet, and a router connected to the first subnet, the second subnet, and the third subnet. The first subnet is provided with a first virtual instance, the second subnet is provided with a second virtual instance, the third subnet is provided with a packet processing cluster, the packet processing cluster includes a plurality of nodes on which a packet processing service is set, the load balancer includes a first ENI and a second ENI, the first ENI is connected to both the first subnet and the second subnet, and the second ENI is connected to the third subnet.

Both the configuration instruction receiving module 1401 and the cloud system creation module 1402 may be implemented by using software or hardware. For example, the following uses the configuration instruction receiving module 1401 as an example to describe an implementation of the configuration instruction receiving module 1401. Similarly, for an implementation of the cloud system creation module 1402, refer to the implementation of the configuration instruction receiving module 1401.

A module is used as an example of a software functional unit, and the configuration instruction receiving module 1401 may include code that runs on a computing instance. The computing instance may include at least one of a physical host (computing device), a virtual machine, and a container. Further, there may be one or more computing instances. For example, the configuration instruction receiving module 1401 may include code that runs on a plurality of hosts/virtual machines/containers. It should be noted that the plurality of hosts/virtual machines/containers configured to run the code may be distributed in a same region (region), or may be distributed in different regions. Further, the plurality of hosts/virtual machines/containers configured to run the code may be distributed in a same AZ, or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed in a same VPC, or may be distributed in a plurality of VPCs. Generally, one VPC is set in one region. For cross-region communication between two VPCs in a same region and between VPCs in different regions, a communication gateway needs to be set in each VPC, to implement interconnection between the VPCs by using the communication gateway.

A module is used as an example of a hardware functional unit, and the configuration instruction receiving module 1401 may include at least one computing device such as a server. Alternatively, the configuration instruction receiving module 1401 may be a device implemented by using an ASIC or a PLD. The PLD may be implemented by a CPLD, an FPGA, GAL, or any combination thereof.

The plurality of computing devices included in the configuration instruction receiving module 1401 may be distributed in a same region, or may be distributed in different regions. The plurality of computing devices included in the configuration instruction receiving module 1401 may be distributed in a same AZ, or may be distributed in different AZs. Similarly, the plurality of computing devices included in the configuration instruction receiving module 1401 may be distributed in a same VPC, or may be distributed in a plurality of VPCs. The plurality of computing devices may be any combination of computing devices such as a server, an ASIC, a PLD, a CPLD, an FPGA, or GAL.

It should be noted that, in another embodiment, the configuration instruction receiving module 1401 may be configured to perform any step in the configuration method based on a public cloud service, the cloud system creation module 1402 may be configured to perform any step in the configuration method based on a public cloud service, steps implemented by the configuration instruction receiving module 1401 and the cloud system creation module 1402 may be specified as required, and different steps in the configuration method based on a public cloud service are separately implemented by using the configuration instruction receiving module 1401 and the cloud system creation module 1402, to implement all functions of the cloud management platform.

In this embodiment of this application, the cloud system provided in this solution may be used by a tenant to set up a load balancer, a packet processing cluster including a plurality of nodes, and the like, so that tenant traffic is distributed to a plurality of next hops by using the load balancer, that is, distributed to the plurality of nodes, thereby improving communication reliability. Further, in this solution, the tenant does not need to perform additional overlay protocol configuration on the load balancer and the packet processing cluster, thereby simplifying an operation of the tenant, improving practicability of the cloud system, and improving performance of the cloud system.

It should be noted that, according to the cloud management platform provided in the foregoing embodiment, when the cloud system is configured, division into the foregoing functional modules is merely described by using an example. In actual application, the foregoing functions may be allocated to different functional modules for implementation based on a requirement. In other words, an internal structure of the apparatus is divided into different functional modules, to implement all or some of the functions described above. In addition, the cloud management platform provided in the foregoing embodiment and the embodiment of the configuration method based on a public cloud service belong to a same concept. For a specific implementation process thereof, refer to the method embodiment. Details are not described herein again.

All or some of the foregoing embodiments may be implemented by software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedures, or functions based on embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, like a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state disk, SSD)), or the like. It should be noted that the computer-readable storage medium mentioned in this embodiment of this application may be a non-volatile storage medium, that is, may be a non-transitory storage medium.

It should be understood that "at least one" in this specification means one or more, and "a plurality of" means two or more. In descriptions of embodiments of this application, "/" means "or" unless otherwise specified. For example, A/B may indicate A or B. In this specification, "and/or" merely describes an association relationship between associated objects and indicates that three relationships may exist. For example, A and/or B may indicate the following three cases: Only A exists, both A and B exist, and only B exists. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

It should be noted that information (including but not limited to user equipment information, personal information of a user, and the like), data (including but not limited to data used for analysis, stored data, displayed data, and the like), and signals in embodiments of this application are used under authorization by the user or full authorization by all parties, and capturing, use, and processing of related data need to conform to related laws, regulations, and standards of related countries and regions.

The foregoing descriptions are merely embodiments of this application, but are not intended to limit this application. Any modification, equivalent replacement, or improvement made without departing from the spirit and principle of this application should fall within the protection scope of this application.

## Claims

1. A cloud system based on a public cloud service, wherein the cloud system is set on an infrastructure that provides a public cloud service, the infrastructure comprises a plurality of data centers, each of the data centers is provided with at least one server, the public cloud service runs on one or more servers of the infrastructure, and the cloud system comprises:
a virtual private cloud VPC, comprising a first subnet, a second subnet, a third subnet, and a router connected to the first subnet, the second subnet, and the third subnet, wherein the first subnet is provided with a first virtual instance, the second subnet is provided with a second virtual instance, the third subnet is provided with a packet processing cluster, and the packet processing cluster comprises a plurality of nodes on which a packet processing service is set; and
a load balancer, comprising a first elastic network interface ENI and a second ENI, wherein the first ENI is connected to both the first subnet and the second subnet, and the second ENI is connected to the third subnet, wherein
the first virtual instance is configured to send a request packet to the first ENI, wherein a destination internet protocol IP address of the request packet is a private network address of the second virtual instance in the second subnet, and a source IP address thereof is a private network address of the first virtual instance in the first subnet;
the load balancer is configured to: receive the request packet from the first ENI, determine a destination node from the plurality of nodes based on the source IP address and the destination IP address of the request packet, and send the request packet to the destination node via the second ENI, wherein a packet processing rule defined by a tenant of the VPC is set on the destination node; and
the destination node is configured to: when determining that the request packet conforms to the packet processing rule, send the request packet to the second virtual instance by using the router based on the destination IP address of the request packet.

2. The cloud system according to claim 1, wherein
the second virtual instance is configured to: receive the request packet, generate a response packet based on the request packet, and send the response packet to the first ENI, wherein a destination IP address of the response packet is the private network address of the first virtual instance in the first subnet, and a source IP address thereof is the private network address of the second virtual instance in the second subnet;
the load balancer is further configured to: receive the response packet from the first ENI, determine the destination node from the plurality of nodes based on the source IP address and the destination IP address of the response packet, and send the response packet to the destination node via the second ENI; and
the destination node is further configured to: when determining that the response packet conforms to the packet processing rule, send the response packet to the first virtual instance by using the router based on the destination IP address of the response packet.

3. The cloud system according to claim 2, wherein
the destination node is further configured to: discard the request packet when determining that the request packet does not conform to the packet processing rule, and/or discard the response packet when determining that the response packet does not conform to the packet processing rule.

4. The cloud system according to claim 2 or 3, wherein the source IP address and the destination IP address of the request packet are set in a quintuple of the request packet, and the quintuple of the request packet further comprises a source port, a destination port, and a transport layer protocol of the request packet; and
the load balancer is specifically configured to: perform an operation on the quintuple of the request packet based on a bidirectional consistent hashing algorithm, and determine the destination node from the plurality of nodes based on a first operation result generated from the operation.

5. The cloud system according to claim 4, wherein the source IP address and the destination IP address of the response packet are set in a quintuple of the response packet, and the quintuple of the response packet further comprises a source port, a destination port, and a transport layer protocol of the response packet; and
the load balancer is specifically configured to: perform an operation on the quintuple of the response packet based on the bidirectional consistent hashing algorithm, and determine the destination node from the plurality of nodes based on a second operation result generated from the operation, wherein a value of the first operation result is the same as a value of the second operation result.

6. The cloud system according to any one of claims 1 to 5, wherein the packet processing rule comprises a firewall packet filtering rule or a security group rule.

7. The cloud system according to any one of claims 1 to 6, wherein the cloud system further comprises a cloud management platform; and
the cloud management platform is configured to: receive one or more public cloud service configuration instructions that are input by the tenant, and create the VPC, the load balancer, and the packet processing cluster on the infrastructure according to the one or more public cloud service configuration instructions.

8. The cloud system according to any one of claims 1 to 7, wherein
the load balancer is further configured to: before sending the request packet to the destination node via the second ENI, modify a destination media access control MAC address of the request packet to a MAC address of the destination node, and modify a source MAC address thereof to a MAC address of the second ENI.

9. A packet processing method based on a public cloud service, wherein the method is applied to an infrastructure that provides a public cloud service, the infrastructure comprises a virtual private cloud VPC and a load balancer, the VPC comprises a first subnet, a second subnet, a third subnet, and a router connected to the first subnet, the second subnet, and the third subnet, the first subnet is provided with a first virtual instance, the second subnet is provided with a second virtual instance, the third subnet is provided with a packet processing cluster, the packet processing cluster comprises a plurality of nodes on which a packet processing service is set, the load balancer comprises a first elastic network interface ENI and a second ENI, the first ENI is connected to both the first subnet and the second subnet, the second ENI is connected to the third subnet, and the method comprises:
sending, by the first virtual instance, a request packet to the first ENI, wherein a destination internet protocol IP address of the request packet is a private network address of the second virtual instance in the second subnet, and a source IP address thereof is a private network address of the first virtual instance in the first subnet;
receiving, by the load balancer, the request packet from the first ENI, determining a destination node from the plurality of nodes based on the source IP address and the destination IP address of the request packet, and sending the request packet to the destination node via the second ENI, wherein a packet processing rule defined by a tenant of the VPC is set on the destination node; and
sending, by the destination node when determining that the request packet conforms to the packet processing rule, the request packet to the second virtual instance by using the router based on the destination IP address of the request packet.

10. The method according to claim 9, wherein the method further comprises:
receiving, by the second virtual instance, the request packet, generating a response packet based on the request packet, and sending the response packet to the first ENI, wherein a destination IP address of the response packet is the private network address of the first virtual instance in the first subnet, and a source IP address thereof is the private network address of the second virtual instance in the second subnet;
receiving, by the load balancer, the response packet from the first ENI, determining the destination node from the plurality of nodes based on the source IP address and the destination IP address of the response packet, and sending the response packet to the destination node via the second ENI; and
sending, by the destination node when determining that the response packet conforms to the packet processing rule, the response packet to the first virtual instance by using the router based on the destination IP address of the response packet.

11. The method according to claim 10, wherein the method further comprises:
discarding, by the destination node, the request packet when determining that the request packet does not conform to the packet processing rule, and/or discarding the response packet when determining that the response packet does not conform to the packet processing rule.

12. The method according to claim 10 or 11, wherein the source IP address and the destination IP address of the request packet are set in a quintuple of the request packet, the quintuple of the request packet further comprises a source port, a destination port, and a transport layer protocol of the request packet, and determining, by the load balancer, the destination node from the plurality of nodes based on the source IP address and the destination IP address of the request packet comprises:
performing, by the load balancer, an operation on the quintuple of the request packet based on a bidirectional consistent hashing algorithm, and determining the destination node from the plurality of nodes based on a first operation result generated from the operation.

13. The method according to any one of claims 10 to 12, wherein the source IP address and the destination IP address of the response packet are set in a quintuple of the response packet, the quintuple of the response packet further comprises a source port, a destination port, and a transport layer protocol of the response packet, and determining, by the load balancer, the destination node from the plurality of nodes based on the source IP address and the destination IP address of the response packet specifically comprises:
performing, by the load balancer, an operation on the quintuple of the response packet based on the bidirectional consistent hashing algorithm, and determining the destination node from the plurality of nodes based on a second operation result generated from the operation, wherein a value of the first operation result is the same as a value of the second operation result.

14. The method according to any one of claims 10 to 13, wherein the packet processing rule comprises a firewall packet filtering rule or a security group rule.

15. The method according to any one of claims 9 to 14, wherein the method further comprises:
before sending the request packet to the destination node via the second ENI, modifying, by the load balancer, a destination media access control MAC address of the request packet to a MAC address of the destination node, and modifying a source MAC address thereof to a MAC address of the second ENI.

16. A computing device cluster, comprising at least one computing device, wherein each computing device comprises a processor and a memory; and
the processor of the at least one computing device is configured to execute instructions stored in the memory of the at least one computing device, to cause the computing device cluster to perform the method according to any one of claims 9 to 15.

17. A computer program product comprising instructions, wherein when the instructions are run by a computing device cluster, the computing device cluster is caused to perform the method according to any one of claims 9 to 15.

18. A computer-readable storage medium, comprising computer program instructions, wherein when the computer program instructions are executed by a computing device cluster, the computing device cluster performs the method according to any one of claims 9 to 15.
